# EUROPEAN PATENT SPECIFICATION

(11) **EP 2 864 410 B1**
(45) Date of publication and mention of the grant of the patent: **30.03.2016**
(21) Application number: 12799563.7
(22) Date of filing: 12.12.2012
(51) Int. Cl.: C08K 5/3492, C08L 77/00

(54) **FLAME RETARDANT POLYAMIDE COMPOSITION**
FLAMMHEMMENDE POLYAMIDZUSAMMENSETZUNG
COMPOSITION POLYAMIDE IGNIFUGE

(30) Priority: 20.06.2012 EP 12172668
(43) Date of publication of application: 29.04.2015
(73) Proprietor: DSM IP Assets B.V., 6411 TE Heerlen (NL)
(72) Inventor: RULKENS, Rudy, NL-6100 AA Echt (NL); DIEPENS, Marjolein, NL-6100 AA Echt (NL)
(74) Representative: van der Ploeg, Antonius Franciscus M.J.
(86) International application number: PCT/EP2012/075144
(87) International publication number: WO 2013/189557

(56) References cited:
- EP-A1- 0 994 156
- WO-A1-01/21698
- WO-A1-96/16948
- US-A1- 2007 299 171

## Description

The invention relates to a flame retardant polyamide composition. More particular, the flame retardant polyamide composition is a halogen free flame retardant polyamide composition comprising melam, and is intended for high temperature applications.

Flame retardants used in halogen free flame retardant polyamide composition include nitrogen containing flame retardants like melamine and derivatives thereof, such as melamine cyanurate and melamine condensation products such as melam, melem and melon, and phosphorous containing flame retardants like phosphinates, such as metal phosphinates and salts of phosphinic acids and nitrogen compounds. Examples of such compositions are described, for example, in WO 96/16948 A1, EP 0994156 A1, US 2007/299171 A1, WO 01/21698 A1, EP-0794976-B1 and EP-0996678-B1. Polyamides used therein include polyamide-46, polyamide-66 and polyamide-66/6T/6I. Compared to several other nitrogen containing flame retardants, like melamine and melamine cyanurate, melamine condensation products have the advantage that they are more stable during processing and are less volatile, whereas compared to phosphorous containing flame retardants, melamine condensation products have the advantage that they are less corrosive. This increases the interest for use of the melamine condensation products as flame retardant for halogen free flame retardant polymer compositions.

A problem with such a flame retardant composition comprising melam as flame retardant is that moulded parts formed from the composition exhibit blooming, a phenomenon that typically occurs when the moulded parts are exposed to hot and humid conditions for an extended period. The blooming is evident from grey to white layer of material formed upon such exposure at the surface of the moulded parts. This blooming material becomes in particular evident on dark coloured moulded parts. Likewise these grey-to-white spots consist of or comprise one or components coming from the melamine based flame retardant. This blooming gives the moulded parts a bad appearance and is often unwanted. The blooming is also more prone in high melting polyamides, which have to be processed at elevated temperatures.

The aim of the present invention is therefore to provide a halogen free flame retardant polyamide composition, which has the advantages of melam as halogen free flame retardant but does not have the problem of blooming as described above.

This aim has been achieved with the composition according to the invention, comprising (A) a polyamide polymer and (B) melam, wherein the polyamide polymer is a semi-crystalline polyamide having a melting temperature of at least 270°C, and wherein the polyamide polymer has a carbon/nitrogen ratio of at least 8.

The effect of the composition comprising melam and the polyamide having a carbon/nitrogen ratio of at least 8, is that compared to a corresponding composition comprising melam and as the polyamide an aliphatic polyamide, such as polyamide-4,6 and polyamide 6,6 or a semi-aromatic polyamide such as polyamide 66/6T/6I, having a carbon/nitrogen ratio of less than 8, blooming is reduced.

The carbon/nitrogen ratio, further herein abbreviated as C/N ratio, is determined by the ratio of the molar amount of carbon atoms in the polyamide and the molar amount of nitrogen atoms in the polyamide.

A semi-aromatic polyamide comprises repeat units derived from aromatic monomers, next to repeat units derived from aliphatic monomers. The aromatic monomers can be either aromatic dicarboxylic acids and/or aromatic diamines. These aromatic dicarboxylic acids are suitably combined with aliphatic diamines, and optionally with aliphatic dicarboxylic acids and/or aromatic diamines. The aromatic diamines are suitably combined with aliphatic dicarboxylic acids, and optionally with aliphatic diamines and/or aromatic dicarboxylic acids.

Suitable aromatic dicarboxylic acids are for example, terephthalic acid, isophthalic acid, naphthalene dicarboxylic acid, biphenyl dicarboxylic acid and methylene bisphenyl dicarboxylic acid. These carboxylic acids comprise respectively the following number of carbon atoms: terephthalic acid: 8, isophthalic acid: 8, naphthalene dicarboxylic acid: 12, biphenyl dicarboxylic acid: 14; and methylene bisphenyl dicarboxylic acid: 15.

Aliphatic diamines that are suitably combined with the aromatic and/or cyclo-aliphatic dicarboxylic acid include linear and branched aliphatic diamines. Preferably these diamines have at least 8 carbon atoms, more preferably more than 8 carbon atoms, for example at least 9, 10, 12, 14 or still better at least 18 carbon atoms. These longer diamines may be combined with shorter diamines, of for example, 2 - 7 carbon atoms, as long as the C/N ratio in the polyamide is at least 8, and preferably at least 9, 10, or even better at least 12.

Aliphatic dicarboxylic acids that are suitably combined with the aromatic and/or cyclo-aliphatic dicarboxylic acid include linear and branched aliphatic dicarboxylic acids. Preferably these dicarboxylic acids have at least 8 carbon atoms, more preferably more than 8 carbon atoms, for example at least 9, 10, 12, 14 or still better at least 18 carbon atoms. These longer dicarboxylic acids may be combined with shorter diamines, of for example, 4 - 7 carbon atoms, as long as the C/N ratio in the polyamide is at least 8, and preferably at least 9, 10, or even better at least 12.

The semi-aromatic polyamide may also comprise repeat units derived from cyclo-aliphatic monomers. Cyclo-aliphatic monomers can be either cyclo-aliphatic diamines, such as cyclohexane-diamine and bis(methylamino)-cyclohexane, or cyclo-aliphatic dicarboxylic acids, such as cyclohexane dicarboxylic acid, or a combination thereof. Cyclohexane-diamine has 6 carbon atoms and 2 nitrogen atoms; bis(methylamino)-cyclohexane has 8 carbon atoms and 2 nitrogen atoms; and cyclohexane dicarboxylic acid has 8 carbon atoms.

The semi-aromatic polyamide may comprise repeat-units derived from aromatic monomers in an amount varying over a wide range. For example, these aromatic repeat units are present in the semi-aromatic polyamide in an amount in the range of 10 - 90 mole %, relative to the total molar amount of repeat units in the polyamide. Suitably, the amount is in the range of 10 - 75 mole %, and more particularly 20- 60 mole%.

The following is a preferred embodiment of the invention: a flame retardant polyamide composition, wherein the semi-aromatic polyamide comprises repeat units derived from terephthalic acid and repeat units derived from diamines with at least eight carbon atoms. More preferably, the semi-aromatic polyamide comprises repeat units derived from terephthalic acid and repeat units derived from diamines with more than eight carbon atoms, and wherein the C/N ratio of more than 8.

The C/N ratio in the flame retardant polyamide composition according to the invention is at least 8, preferably at least 9, and more preferably 10 or higher.

The polyamide in the flame retardant polyamide composition according to the invention is a semi-crystalline polyamide having a melting temperature of at least 270°C, more preferably at least 290 °C.

With the term melting temperature is herein understood the temperature, measured by the DSC method according to ASTM D3417-97 E793-85/794-85, on pre-dried samples in an N2 atmosphere with heating and cooling rate of 10°C/min. Herein Tm has been calculated from the peak value of the highest melting peak in the second heating cycle.

It has been observed that the problem of blooming with melam in prior art compositions becomes worse if the compositions have been processed before, e.g. during compounding and/or during moulding, at higher temperatures. As such compositions are generally processed by a melt process, in particular the compositions comprising higher melting polyamides have to be processed at higher temperatures. With the polymer compositions according to the invention comprising a polyamide having a higher melting temperature or being processed at higher temperature, meanwhile having a C/N ratio of 8 or higher, the problem of blooming is reduced despite the high processing temperature, compared to polymer compositions comprising a polyamide having a C/N ratio below 8.

The content of melam (component B) in the flame retardant polyamide composition according to the invention may vary over a wide range, and the effect of the invention is already visible at relative low melam content. Suitably, the composition comprises 1 - 40 wt.%, preferably 2 - 35 wt.%, or even 5 - 30 wt.%, relative to the total weight of the composition, of melam. In fact, the problem of blooming in polymer compositions comprising a polyamide having a C/N ratio below 8 can already be observed at relative low melam content, and even can be worse compared to a similar composition with high melam content. The effect of the invention of reduced blooming is visible already at low melam content.

The content of the polyamide having a C/N ratio of at least 8 (component A) in the flame retardant polyamide composition may also vary over a wide range. Suitably, the composition comprises 30 - 99 wt.%, relative to the total weight of the composition, of the polyamide (A).

The composition according to the invention may comprise, next to components (A) and (B), one or more further components. Suitable components comprised by the composition are selected from reinforcement agents, fillers, pigments, processing aids, stabilizers and any other auxiliary additives used in halogen free flame retardant polyamide compositions.

The composition according to the invention suitably has a light colour, for example by comprising only white pigments, or even no pigment. This makes the blooming, if occurring at all, less visible. In a preferred embodiment, the composition comprises a black pigment. With the black pigment, the effect of the invention of reduced blooming is most evident.

The reinforcement agents and fillers can be present in an amount varying over a wide range. Suitably, these are comprised in a total amount of 1 - 60 wt.%, more particular 5 - 40 wt.%, relative to the total weight of the composition.

The processing aids, stabilizers and any other auxiliary additives can also be present in an amount varying over a wide range, and are suitably comprised in a total amount of 0.01 - 20 wt.%, more particular 0.1 - 10 wt.%, relative to the total weight of the composition.

An example of a composition according to the invention is a composition consisting of
(A) 30 - 98.99 wt.% of the polyamide polymer (A) having a carbon/nitrogen (C/N) ratio of at least 8;
(B) 1 - 40 wt. % of melam;
(C) 0 - 60 wt.% of reinforcement agents and/or fillers; and
(D) 0.01 - 20 wt.% of at least one other component
wherein the weight percentages (wt.%) are relative to the total weight of the composition.

The invention is further illustrated with the following example and comparative experiments.

### Thermal characterisation by DSC (according to ASTM D3417-97 E793-85/794-85) Determination of the melting temperature, Tₘ:

The measurement of the melting temperature Tₘ was carried out with a Mettler Toledo Star System (DSC) using a heating and cooling rate of 10°C/min. in a N₂ atmosphere. For the measurement a sample of about 5 mg pre-dried powdered polymer was used. The pre-drying was carried out at high vacuum, i.e. less than 50 mbar and a 105°C during 16 hrs. The sample was heated from 20°C to the maximum temperature, Tmax, at 10°C/min, immediately cooled to 0°C at 10°C/min, kept at 0°C for 5 min and subsequently heated to Tmax again at 10°C/min. For the melting temperature Tₘ the peak value of the melting peak in the second heating cycle was determined.

### Materials

- PA-1: PA4T/6T/66 (40/50/10 mol/mol); semi-aromatic polyamide; Tm 330°C; C/N ratio 6.1 (ex DSM)
- PA-2: PA-66; aliphatic polyamide; Tm 260°C; C/N ratio 6 (ex DSM)
- PA-3: PA10T/6T (82.2/17.8 mol/mol) semi-aromatic polyamide produced according to patent EP1988113 ex. B6-VK and B6-NK; Tm 295°C; C/N ratio 8.65
- PA-4: PA10/4T (90/10 mol/mol); semi-aromatic polyamide; Tm 310°C; C/N ratio 8.7
- FR: Melam; purity 99.8 %; (ex DSM)
- MB-CB: masterbatch of carbon black (20 wt.%) in polyamide 6

### Preparation of compositions and test samples

Compositions with 91 wt.% polyamide, 4 wt.% master batch carbon black, and 5 wt.% melam were prepared by melt-mixing in an extruder compounding apparatus involving standard moulding conditions, with an extrusion temperature of 350°C. Test samples with a thickness of 2 mm were prepared on an injection moulding machine using standard injection moulding conditions, also with the extrusion temperature set at 350°C. The experiment with PA-2 was repeated except that the processing temperatures were set at 290°C.

### Blooming test

Test samples were conditioned for 168 hours at 85°C/85% relative humidity. The so conditioned samples were visually inspected on blooming. The samples based on PA-1 and PA-2 showed significant blooming, even the one of PA-2 processed at lower temperature, whereas the sample based on PA-3 showed much less blooming and on PA-4 showed hardly any visible blooming.

## Claims

1. Flame retardant polyamide composition comprising (A) a polyamide polymer and (B) melam, wherein the polyamide polymer is a semi-crystalline semi-aromatic polyamide having a melting temperature of at least 270°C and wherein the polyamide polymer has a carbon/nitrogen (C/N) ratio of at least 8.

2. Flame retardant polyamide composition according to claim 1, wherein the semi-aromatic polyamide comprises repeat units derived from aromatic monomers in an amount in the range of 10 - 90 mole %, relative to the total molar amount of repeat units in the polyamide.

3. Flame retardant polyamide composition according to claim 2, wherein the semi-aromatic polyamide comprises repeat units derived from terephthalic acid and repeat units derived from diamines with more than eight carbon atoms.

4. Flame retardant polyamide composition according to any of claims 1-3, wherein the C/N ratio is more than 8, preferably at least 9.

5. Flame retardant polyamide composition according to any one of claims 1-4, wherein the composition comprises 1 - 40 wt. %, relative to the total weight of the composition, of melam.

6. Flame retardant polyamide composition according to any one of claims 1-5, wherein the composition comprises 30 - 99 wt.%, relative to the total weight of the composition, of the polyamide polymer (A) having a carbon/nitrogen (C/N) ratio of at least 8.

7. Flame retardant polyamide composition according to any one of claims 1-6, wherein the composition consists of:
(A) 30 - 98.99 wt.% of the polyamide polymer (A) having a carbon/nitrogen (C/N) ratio of at least 8;
(B) 1 - 40 wt. % of melam;
(C) 0 - 60 wt.% of reinforcement agents and/or fillers; and
(D) 0.01 - 20 wt.% of at least one other component
wherein the weight percentages (wt.%) are relative to the total weight of the composition.

8. Moulded part made of a flame retardant polyamide composition according to any of claims 1 - 7.

## Patentansprüche

1. Flammwidrige Polyamidzusammensetzung, umfassend (A) ein Polyamidpolymer und (B) Melam, wobei es sich bei dem Polyamidpolymer um ein teilkristallines teilaromatisches Polyamid mit einer Schmelztemperatur von mindestens 270°C handelt und das Polyamidpolymer ein Kohlenstoff/Stickstoff-Verhältnis (C/N-Verhältnis) von mindestens 8 aufweist.

2. Flammwidrige Polyamidzusammensetzung nach Anspruch 1, wobei das teilaromatische Polyamid Wiederholungseinheiten, die sich von aromatischen Monomeren ableiten, in einer Menge im Bereich von 10-90 Mol-%, bezogen auf die gesamte molare Menge von Wiederholungseinheiten in dem Polyamid, umfasst.

3. Flammwidrige Polyamidzusammensetzung nach Anspruch 2, wobei das teilaromatische Polyamid Wiederholungseinheiten, die sich von Terephthalsäure ableiten, und Wiederholungseinheiten, die sich von Diaminen mit mehr als acht Kohlenstoffatomen ableiten, umfasst.

4. Flammwidrige Polyamidzusammensetzung nach einem der Ansprüche 1-3, wobei das C/N-Verhältnis mehr als 8 und vorzugsweise mehr als 9 beträgt.

5. Flammwidrige Polyamidzusammensetzung nach einem der Ansprüche 1-4, wobei die Zusammensetzung 1-40 Gew.-%, bezogen auf das Gesamtgewicht der Zusammensetzung, Melam umfasst.

6. Flammwidrige Polyamidzusammensetzung nach einem der Ansprüche 1-5, wobei die Zusammensetzung 30-99 Gew.-%, bezogen auf das Gesamtgewicht der Zusammensetzung, des Polyamidpolymers (A) mit einem Kohlenstoff/Stickstoff-Verhältnis (C/N-Verhältnis) von mindestens 8 umfasst.

7. Flammwidrige Polyamidzusammensetzung nach einem der Ansprüche 1-6, wobei die Zusammensetzung aus:
(A) 30-98,99 Gew.-% des Polyamidpolymers (A) mit einem Kohlenstoff/Stickstoff-Verhältnis (C/N-Verhältnis) von mindestens 8;
(B) 1-40 Gew.-% Melam;
(C) 0-60 Gew.-% Verstärkungsmitteln und/oder Füllstoffen und
(D) 0,01-20 Gew.-% mindestens einer anderen Komponente
besteht, wobei sich die Gewichtsprozentanteile (Gew.-%) auf das Gesamtgewicht der Zusammensetzung beziehen.

8. Formteil, hergestellt aus einer flammwidrigen Polyamidzusammensetzung nach einem der Ansprüche 1-7.

## Revendications

1. Composition polyamide ignifuge comprenant (A) un polymère polyamide et (B) un mélam, dans laquelle le polymère polyamide est un polyamide semi-aromatique semi-cristallin ayant une température de fusion d'au moins 270 °C et dans laquelle le polymère polyamide a un rapport carbone/azote (C/N) d'au moins 8.

2. Composition polyamide ignifuge selon la revendication 1, dans laquelle le polyamide semi-aromatique comprend des unités structurales dérivées de monomères aromatiques dans une quantité de 10 à 90 %mol, relativement à la quantité molaire totale d'unités structurales dans le polyamide.

3. Composition polyamide ignifuge selon la revendication 2, dans laquelle le polyamide semi-aromatique comprend des unités structurales dérivées d'acide téréphtalique et des unités structurales dérivées de diamines comportant plus de 8 atomes de carbone.

4. Composition polyamide ignifuge selon l'une quelconque des revendications 1 à 3, dans laquelle le rapport C/N est supérieur à 8, préférablement d'au moins 9.

5. Composition polyamide ignifuge selon l'une quelconque des revendications 1 à 4, la composition comprenant 1 à 40 % en poids, relativement au poids total de la composition, de mélam.

6. Composition polyamide ignifuge selon l'une quelconque des revendications 1 à 5, la composition comprenant 30 à 99 % en poids, relativement au poids total de la composition, du polymère polyamide (A) ayant un rapport carbone/azote (C/N) d'au moins 8.

7. Composition polyamide ignifuge selon l'une quelconque des revendications 1 à 6, la composition consistant en :
(A) 30 à 98,99 % en poids du polymère polyamide (A) ayant un rapport carbone/azote (C/N) d'au moins 8 ;
(B) 1 à 40 % en poids de mélam ;
(C) 0 à 60 % en poids d'agents de renforcement et/ou de charges ; et
(D) 0,01 à 20 % en poids d'au moins un autre constituant,
les pourcentages pondéraux (% en poids) étant exprimés relativement au poids total de la composition.

8. Pièce moulée constituée d'une composition polyamide ignifuge selon l'une quelconque des revendications 1 à 7.
